# EUROPEAN PATENT SPECIFICATION

(11) **EP 1 460 182 B1**
(45) Date of publication and mention of the grant of the patent: **29.02.2012**
(21) Application number: 04015222.5
(22) Date of filing: 06.12.2001
(51) Int. Cl.: E01H 5/00, B60T 1/00, F16D 63/00

(54) **Travelling device with parking brake**
Fahrbare Vorrichtung mit Feststellbremse
Dispositif roulant avec frein de stationnement

(30) Priority: 19.07.2001 JP 2001219889; 03.09.2001 JP 2001265570
(43) Date of publication of application: 22.09.2004
(62) Divisional of application: 01129029.3
(73) Proprietor: Yanmar Co., Ltd., Osaka-shi, Osaka 530-0013 (JP); Yoka Industry Co., Ltd., Yabu-gun, Hyogo 667-0024 (JP)
(72) Inventor: Morimoto, Minoru, Yabu-gun Hyogo 667-0024 (JP); Yoneda, Satoru, Yabu-gun Hyogo 667-0024 (JP)
(74) Representative: Henkel, Breuer & Partner

(56) References cited:
- DE-U- 8 903 391
- US-A- 1 334 147
- US-A- 2 709 504
- US-B1- 6 298 937

## Description

### Field of the Art

The present invention relates to a travelling device with a parking brake according to the preamble portion of claim 1. The travelling device can be for example a snow remover.

### Related Art

US-A-2709504 describes an anti-friction parking brake particularly adapted to be used as a parking brake for automotive vehicles and disclosing the features of the preamble portion of claim 1. In this parking brake, when a corresponding operation lever of the brake is in the parking position, a cylindrical roller attached to an end of a brake arm is biased into one of a plurality of rounded recesses formed on the peripheral circumference of a toothed gear by means of a spring element. The recesseses are deeper than a radius of the roller and it is not intended that the roller can be disengaged from the recess as long as the parking brake is in the parking position.

G8903391.4 discloses a ratchet-type parking brake for an automotive vehicle in which a claw engaging into one of a plurality of ratchet teeth arranged on the peripheral circumference of a brake disc can disengage thereform and enter an adjacent tooth only in a forward direction of rotation of the brake disc when the parking brake is in the parking position.

### Disclosure of the Invention

An object of the invention is to provide a travelling device with a parking brake, for example a snow remover, where the brake can be easily mounted and maintained and avoids damage to the brake in case of forced rotation of an axle.

To achieve the object, according to the present invention, there is provided a travelling device with a parking brake as defined in claim 1. Preferred embodiments are defined in the dependent claims.

Other and further objects, features and advantages of the invention will appear more fully from the following description.

### BRIEF DESCRIPTION OF DRAWINGS/FIGURES

Fig. 1 is a perspective left side view of a snow remover to which the present invention can be applied ;

Fig. 2 is a perspective rear view of a lower portion of a header 1 of the snow remover showing sledges 8 attached onto a plowing-auger cover 48;

Fig. 3 is a perspective rear view of the snow remover;

Fig. 4 is a perspective left side view of the snow remover provided with a parking brake 70;

Fig. 5(a) is a left side view of parking brake 70 when a parking lever rod 78 is located at a parking position, and Fig. 5(b) is a left side view of the same when parking lever rod 78 is located at a release position;

Fig. 6 is a left side view of a brake base plate 71;

Fig. 7 is a plan view of the same;

Fig. 8 is a bottom view of the same;

Fig. 9 is a left side view of a brake arm plate 74 of parking brake 70;

Fig. 10 is a rear view of the same;

Fig. 11 is a front view of a parking lever rod 78;

Fig. 12 is a side view of a brake disc 79;

Fig. 13 is a plan view partly in section of the same;

Fig. 14 is a perspective left side view of the snow remover provided with a parking brake 90;

Fig. 15(a) is a left side view of parking brake 90 when a parking lever 39 is located at a parking position, and Fig. 15(b) is a left side view of the same when parking lever 39 is located at a release position;

Fig. 16 is a left side view of a brake arm plate 74 of parking brake 90; and

Fig. 17 is a plan view of parking lever 39.

### DETAILED DESCRIPTION OF THE PREFERRED EMBODIMENT

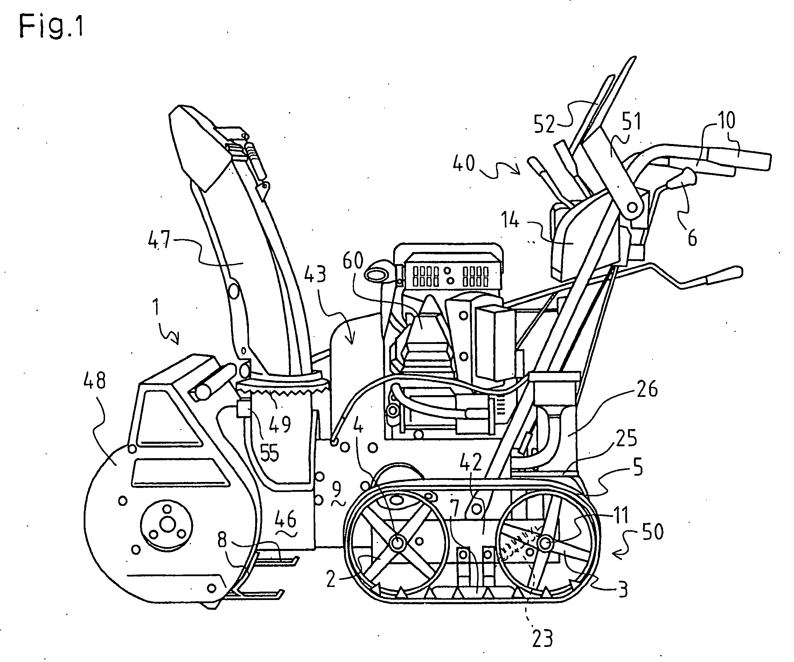

Description will be given of a general construction of a snow remover to which the invention can be applied in accordance with Fig. 1 and others. A header 1 is disposed in front of a main frame 9. Header 1 comprises a blower, a plowing auger and a chute 47. The blower is disposed in a blower cover 46 continuously connected to the front end of main frame 9. Chute 47 for discharging snow laterally rotatably projects upward from blower cover 46. The plowing auger is covered with an auger cover 48 in front of blower cover 46..

The plowing auger and the blower are synchronously driven. The rotating plowing auger crashes the snow on the ground and carries the snow to the middle portion thereof. The blower upwardly blows the snow collected at the middle portion of the plowing auger. The blown snow is guided by chute 47 and discharged outward in an optional direction.

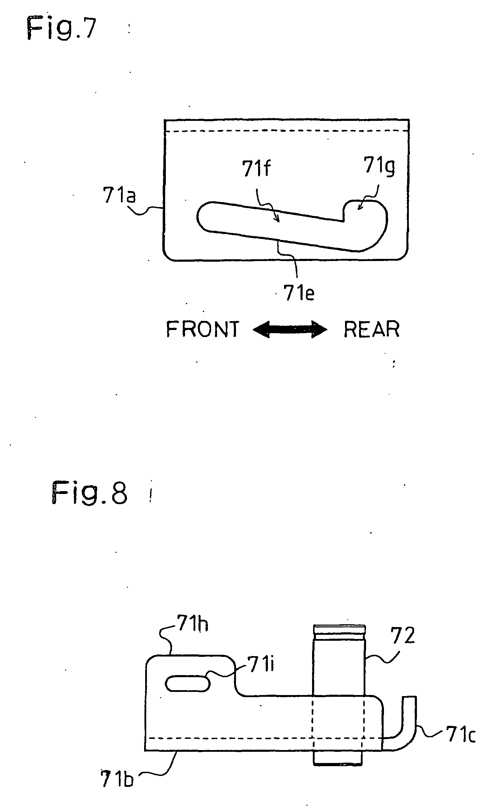

Chute 47 is integrally provided at its bottom with a chute flange 49. Chute flange 49 is rotatably mounted on the top of a chute base 46a which is upwardly formed of blower cover 46. Chute flange 49 is formed with a crown-cap-shaped gear 49a having downward teeth, which is drivingly connected to a motor 55 disposed below chute flange 49. Incidentally, the mechanism interposed between motor 55 and a front portion of chute flange 49 is covered with a cover. Fig. 1 illustrates the snow remover when the cover is removed therefrom. The mechanism for rotation of chute 47 will be detailed later in accordance with Figs. 7 and 8.

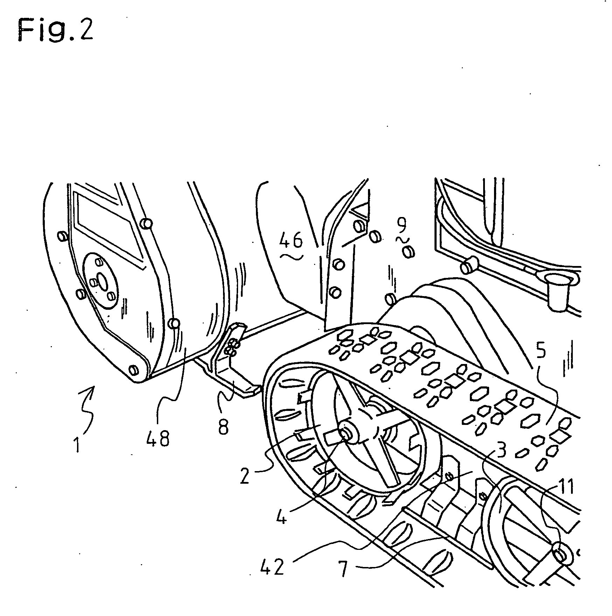

As shown in Figs. 1 and 2, a pair of sledges 8 are fixedly hung symmetrically disposed at a lower portion of header 1 so as to be put on the ground (snow surface). According to this embodiment, as shown in Figs. 1 and 2, the pair of sledges 8 are fixedly hung from left and right rear bottom portions of auger cover 48. Alternatively, sledges 8 may be attached to another part of header 1, e.g., blower cover 46. The positions of sledges 8 can be adjusted in a lateral direction of the snow remover at need. Also, the vertical positions of sledges 8 can be adjusted for fine adjustment of the bottom end of header 1 in relative to the snow surface.

Instead of sledges 8, rollers may be provided below blower cover 46. The vertical positions of the rollers may be adjusted.

A pair of left and right handles 10 are extended upwardly backward from the left and right rear ends of main frame 9. A control portion 40 is constituted above left and right handles 10. That is, a control box 14 is disposed between the top portions of handles 10. A travel clutch lever 51 and a snow-removing clutch lever 52, which are deadman clutch levers, are disposed on respective handles 10.

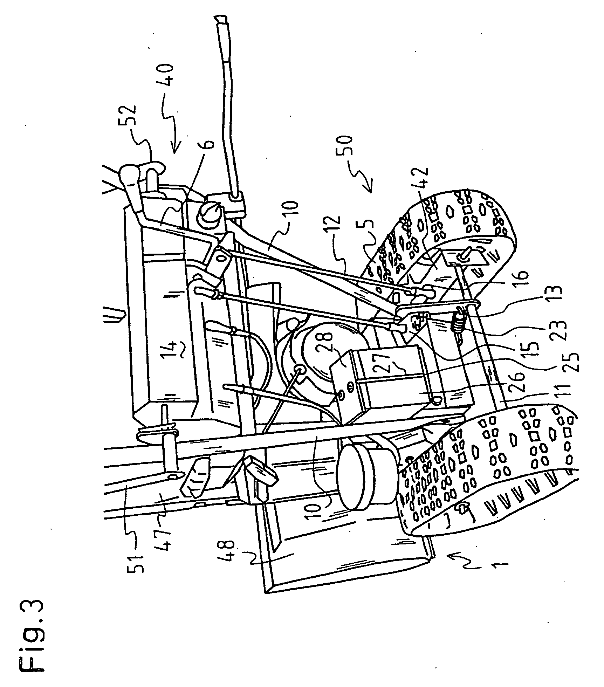

As shown in Fig. 3, a lock lever 6 is vertically rotatably provided on a rear portion of control box 14. As discussed later, lock lever 6 is operated to fix the vertical position of header 1.

An engine 60 is mounted on main frame 9. An output shaft projects forward from engine 60. A belt cover 43 is disposed on an upper portion of main frame 9. A transmission is disposed in a lower portion of main frame 9. A pulley fixed on the output shaft of engine 60 is disposed in belt cover 43 so as to transmit the power of engine 60 to both the transmission and header 1.

The transmission includes an HST. A front axle 4 serving as a travel-driving axle projects from the transmission in both lateral directions so as to penetrate main frame 9. Furthermore, each end of front axle 4 projects outward from a front portion of each of track frames 42 disposed outside respective left and right sides of main frame 9. Main frame 9 is pivoted onto front axle 4 so as to be tilted forward and backward. A pair of drive sprockets 2 are fixed onto respective outer ends of front axle 4. A rear axle 11 is laterally disposed between rear portions of left and right track frames 42. A pair of follower sprockets 3 are rotatably provided onto respective outer ends of rear axle 11. Drive and follower sprockets 2 and 3 outside each of track frames 42 are bound by a crawler belt 5. Thus, front and rear axles 4 and 11, left and right sprockets 2 and 3, track frames 42, crawler belts 5 and so on constitute a crawler type traveling device 50.

A battery base 25 projects backward from the rear end of main frame 9 below handles 10. A battery 26 is mounted on baterry base 25 and fixed thereto by a supporter 27 and a battery cover 28. Such a rear mounting of battery 26 balances the snow remover in the longitudinal direction thereof. Otherwise, battery 26 may be disposed in a front, left or right portion of the snow remover.

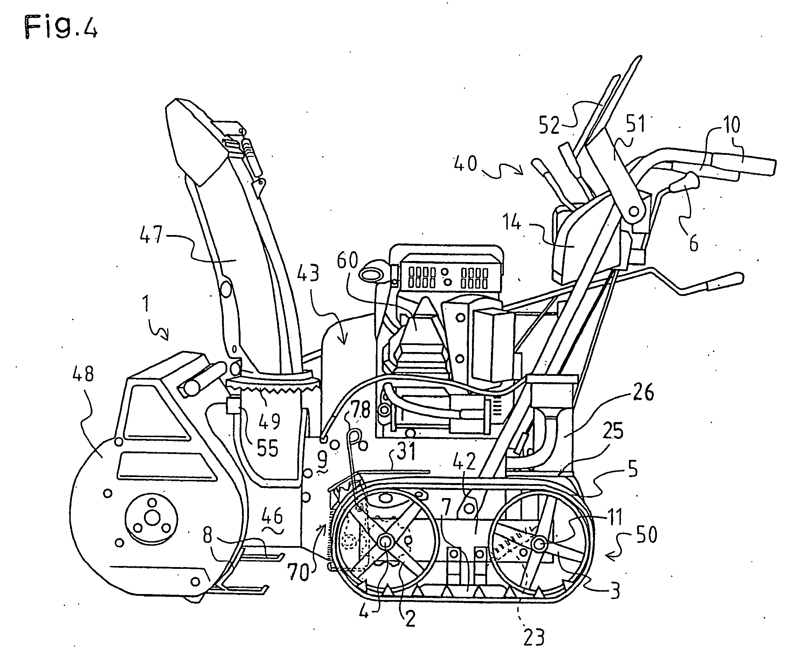

Description will now be given of the snow remover further installed with a parking brake 70 in accordance with Figs. 4 to 13. The same parts with those of the snow remover of Figs. 1 to 3 are designated by the same reference numerals, respectively.

As shown in Fig. 4, parking brake 70 is interposed between an outer side surface (in this embodiment, a left side surface) of main frame 9 and front axle 4 so as to brake front axle 4 for braking the snow remover.

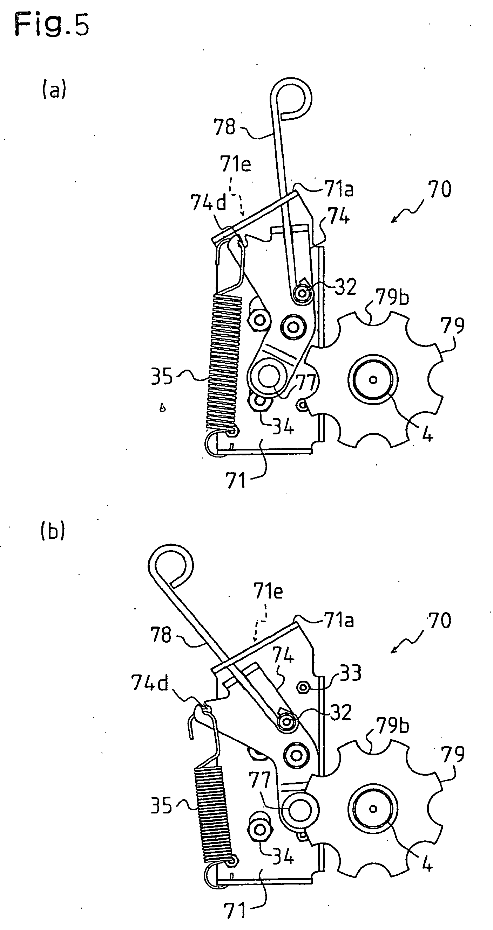

As shown in Fig. 5, parking brake 70 comprises a brake base plate 71, a brake arm plate 74, a parking lever rod 78, a brake disc 79 and so on.

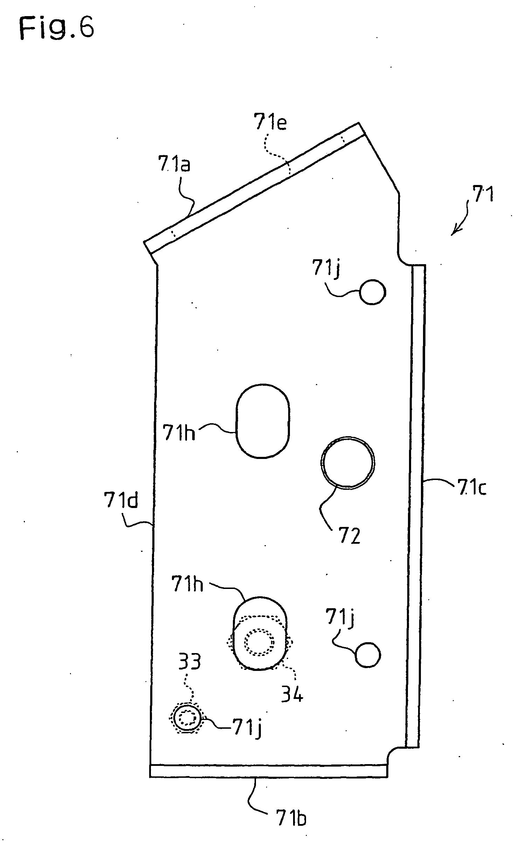

As shown in Fig. 6, brake base plate 71 is a vertical plate perpendicularly bent outward (leftward) at its top, bottom and rear ends so as to form a top surface 71a, a bottom surface 71b and a rear surface 71c, respectively. The remaining vertical plate surface serves as a main surface 71d.

Top surface 71a is inclined upwardly backward. As shown in Fig. 7, top surface 71a is bored with a lever slot 71e in an L-like shape, which consists of a guide slot 71f and a retaining slot 71g. Guide slot 71f is extended substantially longitudinally. Retaining slot 71g is extended from a rear end of guide slot 71f at a right angle.

Bottom surface 71b is laid horizontally. As shown in Fig. 8, a front end portion of bottom surface 71b is expanded outward so as to form an expanded portion 71h. Expanded portion 71h is bored with a slot 71i for providing a spring 35.

Referring to Fig. 6, rear surface 71c is provided for re.inforcing brake base plate 71. In front of rear surface 71c, a fulcrum shaft 72 projects outward from a vertically center portion of main surface 71d. Main surface 71d is bored at its optimal portions with small bolt holes 71j and large slots 71h. Into the outer side surface of main frame 9 are screwed small bolts 33 through respective bolt holes 71j, and large bolts 34 through respective slots 71h, thereby fixing brake base plate 71 to main frame 9.

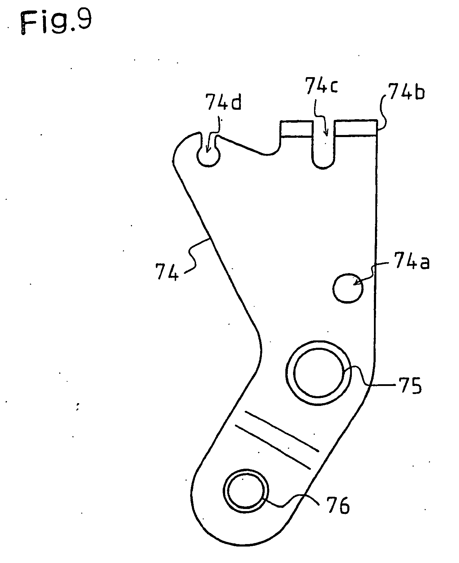

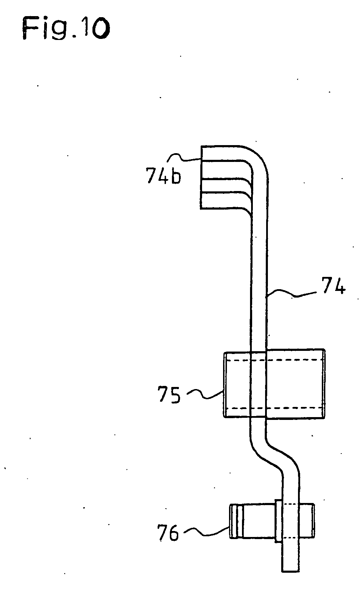

As shown in Figs. 9 and 10, brake arm plate 74 is a doglegged plate. A brake fulcrum collar 75 projects from an intermediate bent portion of brake arm plate 74. Brake fulcrum collar 75 is rotatably provided arround fulcrum shaft 72 so as to provide brake arm plate 74 rotatably in relative to brake base plate 71. A bearing shaft 76 projects outward from a lower end portion of brake arm plate 74. As shown in Fig. 5, a bearing 77 is provided onto an outer (left) end of bearing shaft 76.

Brake arm plate 74 is bored with a bolt hole 74a just above brake fulcrum collar 75. A rear top portion of brake arm plate 74 is bent outward (leftward) at a right angle so as to form an upper surface 74b. Upper surface 74b is provided at a longitudinally middle portion thereof with a notch 74c. Brake arm plate 74 is provided at its front top portion with a notch 74d.

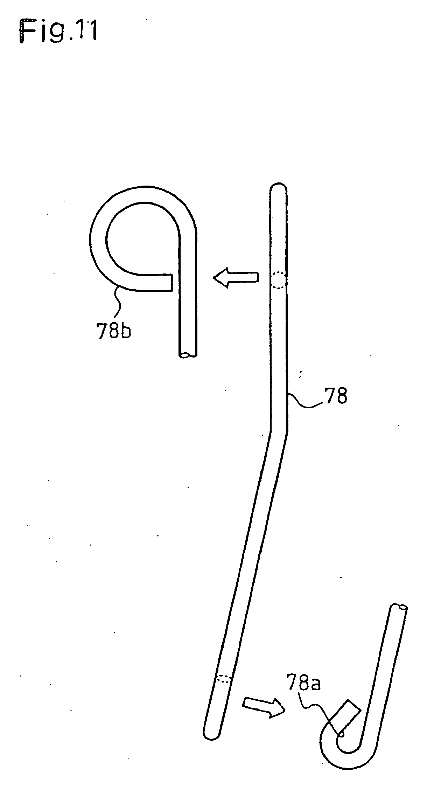

Referring to Fig. 11, parking lever rod 78 is curved at its both ends into ring shapes. One end ring of parking lever rod 78 is formed with an insert hole 78a so as to attach parking lever rod 78 to brake arm plate 74. The other end ring of brake lever 78 which is larger than the ring forming insert hole 78a serves as a knob 78b to be fingered.

A bolt is inserted outward into insert hole 78a of parking lever rod 78 through bolt hole 74a of brake arm plate 74. A nut 32 is screwed up on the outer portion of the bolt toward insert hole 78a so as to fasten parking lever rod 78 to brake arm plate 74, as shown in Fig. 11. Parking lever rod 78 is guided at its intermediate portion through notch 74c of brake arm plate 74, and passed through lever slot 71e in upper surface 71a of brake base plate 71 so as to make the upper end of parking lever rod 78, i.e., knob 78b project upward from upper surface 71a.

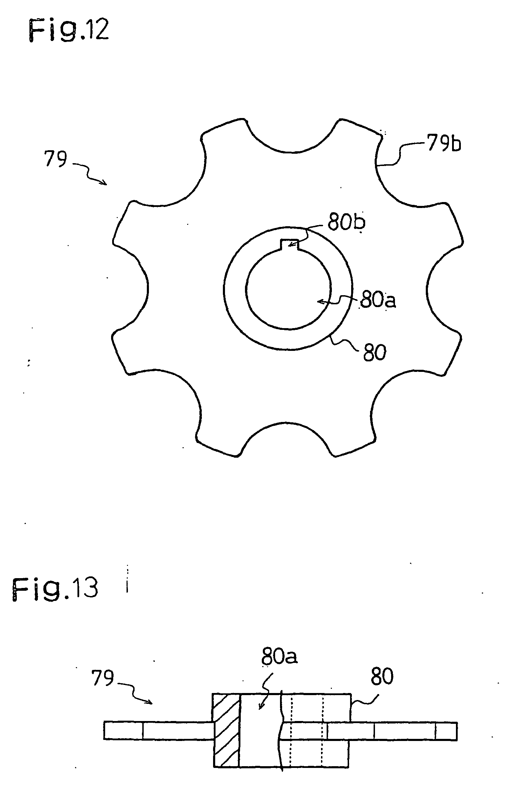

As shown in Figs. 12 and 13. brake disc 79 is formed along its periphery with a plurality of semicircular recesses 79b at regular intervals in correspondence to the periphery of bearing 77 on bearing shaft 76. Brake disc 79 is fixedly provided at the center thereof with a boss 80 having an axial hole 80a with a key slot 80b. The left end portion of front axle 4 is inserted into axial hole 80a of boss 80 while a key formed on front axle 4 being inserted into key slot 80b, whereby brake disc 79 is allowed to rotate together with front axle 4.

As shown in Fig. 5, spring 35 is interposed between brake base plate 71 and brake arm plate 74. One end of spring 35 is hooked on slot 71i of brake base plate 71, and the other end thereof on notch 74d of brake arm plate 74.

Description will be given of operation and advantage of parking brake 70. Parking lever rod 78 is biased forward by spring 35 so as to be located at the front end of guide slot 71f of lever slot 71e in brake base plate 71, as shown in Fig. 5 (b). When parking lever rod 78 is pulled backward along guide slot 71f against the biasing force of spring 35, brake arm plate 74 is rotated centering fulcrum shaft 72 backward together with parking lever rod 78 so as to make bearing 77 apart from recess 79b of brake disc 79, thereby making brake disc 79 and front axle 4 free from bearing 77. At last, parking lever rod 78 reaches the rear end of guide slot 71f, and then, parking lever rod 78 is slightly pulled inward (rightward) so as to be retained in retaining slot 71g of lever slot 71e, as shown in Fig. 5 (a), thereby maintaining the free condition of front axle 4.

Only by a slightly outward (leftward) rotational operation of parking lever rod 78, parking lever rod 78 is removed from retaining slot 71g, and then, naturally rotated forward along guide slot 71f because of the biasing force of spring 35. The more parking lever rod 78 is rotated forward, the more bearing 77 is rotated backward. Finally, as shown in Fig. 5 (b), parking lever rod 78 reaches the front end of guide slot 71f so that bearing 77 is pressed into one of recesses 79b of brake disc 79, thereby locking front axle 4 with main frame 9 through parking brake 70 so as to hold the snow remover in stationary even on a slope securely.

If the parking-braked snow remover is going to be forcibly moved, front axle 4 locked by parking brake 70 is forcibly rotated so that bearing 77 engaged in one of recesses 79b of brake disc 79 is pushed up by brake disc 79 rotated together with front axle 4 so as to be removed from recess 79b. However, during the rotation of brake disc 79, bearing 77 removed from one recess 79b is pressed into the next recess 79b soon because bearing 77 is biased backward toward brake disc 77 by spring 35. Consequently, unless parking lever rod 78 is retained in retaining slot 71g, bearing 77 in contact with the outline edge of brake disc 79 is rotated centering its axis according to the rotation of brake disc 79 with front axle 4 so as to be reciprocated forward and backward, thereby making parking lever rod 78 swing forward and backward. At every time when bearing 77 is pressed into each recess 79b, parking lever rod 78 is hit on the front edge of guide slot 71f, thereby making a sound, which calls an operator's attention to releasing of the parking-braked condition of the snow remover.

The curvature of recess 79b is coincident with that of circular bearing 77 so that bearing 77 can be steadily engaged in recess 79b for locking front axle 4. However, in the present embodiment, considering the biasing force of spring 35 and a size (radius) of brake disc 79, the maximum depth of each recess 79b is smaller than the normal radius with respect to its curvature, that is, the radius of bearing 77. Therefore, if locked front axle 4 is forcibly rotated, bearing 77 can be removed from one recess 79b and enter the next recess 79b comparatively smoothly. Furthermore, each edge of brake disc 79 between adjacent recesses 79b is rounded off, thereby being prevented from damaging bearing 77 moving thereover between adjacent recesses 79b.

The depth of each recess 79b, the force of spring 35 or the size of brake disc 79 may be increased if the braking force applied to brake disc 79 is requested to be larger.

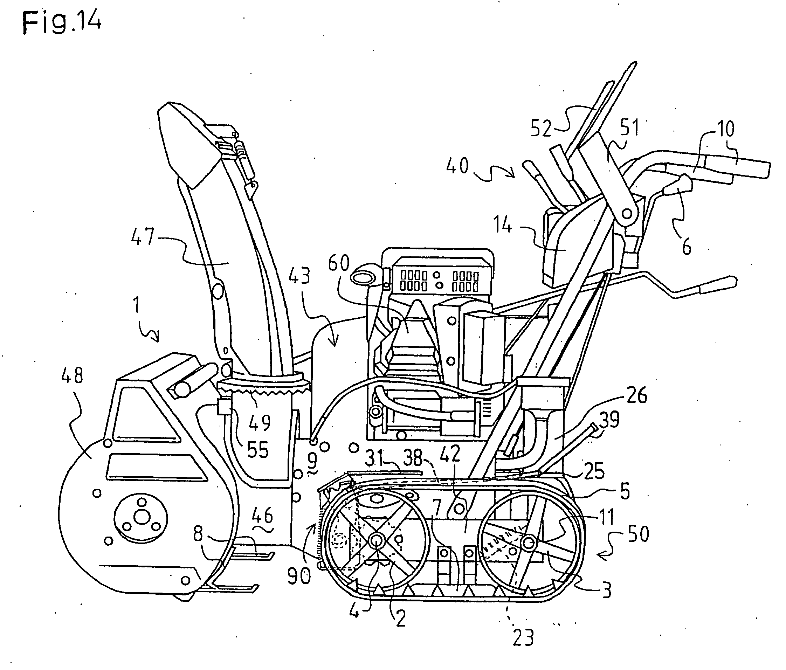

The snow remover shown in Fig. 14 is provided with another parking brake 90 which is almost similar with parking brake 20, except that parking lever rod 78 is replaced with a parking lever 39 connected to brake arm plate 74 through a link rod 38. Description will now be given of parking brake 90 in accordance with Figs. 14 to 17.

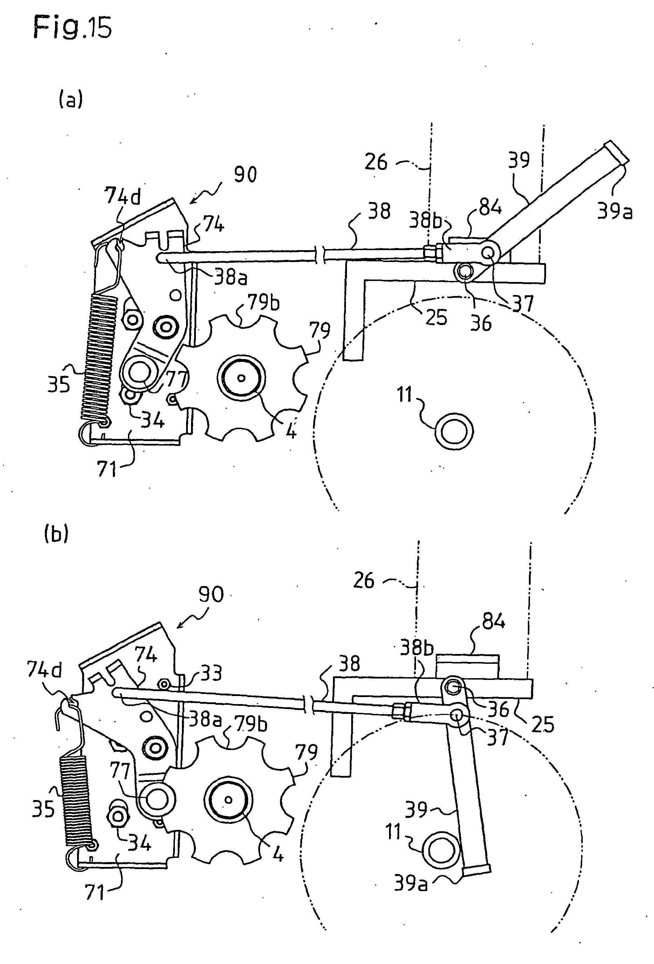

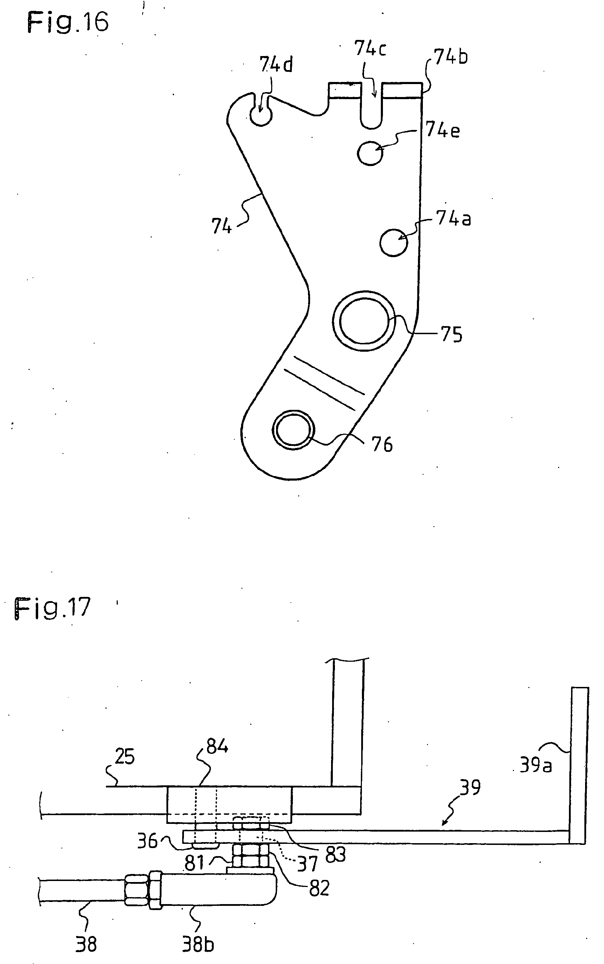

Referring to Fig. 15 and 16, brake arm plate 74 for constituting parking brake 90 is further provided with a hole 74e. This brake arm plate 74 having hole 74e may be used for constituting parking brake 70.
A front end portion 38a of link rod 38 is bent inward (rightward) so as to be rotatably passed through hole 74e. A retaining pin is radially passed through front end portion 38a of link rod 38 projecting inward from hole 74e, thereby preventing link rod 38 from escaping from brake arm plate 74.

Referring to Fig. 15 and 17, a rear end portion of parking lever 39 is bent inward (rightward) in a right angle so as to form a handle 39a. A front end of parking lever 39 is pivoted through a lever pivot 36 onto an outer side surface of a left portion of main frame 9 which constitutes battery base 25. A rear end portion 38b of link rod 38 is pivoted through a rod pivot 37 onto an intermediate portion of parking lever 39.

As shown in Fig. 17, nuts 81 and 82 are screwed up around rod pivot 37 between rear end portion 38b of link rod 38 and parking lever 39. Inside (on the right side) of parking lever 39, a nut 83 is screwed up around the inward end of rod pivot 37. A stopper 84 is mounted on a left end frame portion of batery base 25 so that, if parking lever 39 is rotated upward, nut 83 comes to abut against stopper 84 so as to locate parking lever 39 at its upper limit position serving as a release position.

Consequently, parking lever 39 is interlockingly connected to brake arm plate 74 through link rod 38. Parking lever 39 is disposed at the rear portion of the snow remover and provided with handle 39a, thereby facilitating its operation by an operator standing behind the snow remover.

The operation of parking lever 39 will be described. When parking lever 39 is upwardly rotated from the parking position shown in Fig. 9(b), link rod 38 is pulled backward so as to rotate the top of brake arm plate 74 backward, thereby separating bearing 77 on the bottom of brake arm plate 74 from recess 79b of brake disc 79. The backward rotation of the top of brake arm plate 74 causes spring 35 to over-center, thereby biasing parking lever 39 upward. Finally, nut 83 comes to abut against stopper 84 so as to stop the upward rotation of parking lever 39. Thus, parking lever 39 is retained at the release position, as shown in Fig. 9(a).

On the other hand, when parking lever 39 is rotated downward from the release position shown in Fig. 9(a), link rod 38 is pushed forward so as to make spring 35 over-center. Then, spring 35 biases parking lever 39 downward so as to rotate the top of brake arm plate 74 forward, thereby making bearing 77 enter one of recesses 79b of brake disc 79 so as to brake front axle 4. Finally, downward rotated parking lever 39 comes to abut against rear axle 11 so as to be retained at the parking position as shown in Fig. 9(b).

If the snow remover is forcibly moved while parking lever 39 is retained at the parking position, brake disc 79 is forcibly rotated together with front axle 4 so that bearing 77 goes in and out of recesses 79b of brake disc 79. Accordingly, link rod 38 reciprocates forward and backward so as to swing parking lever 39 up and down. The locking condition of parking brake 90 can be noticed because of the sound generated at every time when parking lever 39 is stroken against rear axle 11.

Furthermore, in comparison with parking brake 70 having parking lever rod 78 disposed in front of rear axle 11, parking lever 39 of parking brake 90 disposed behind rear axle 11 can be seen well by an operator standing behind the snow remover, thereby quickening the upper rotational operation of parking lever 39 for releasing of the parking-braked condition. Incidentally, parking lever 39 may be made more conspicuous by painting or any other means.

As mentioned above, if parking brake 70 is used, the sound of parking lever rod 78 striking brake base plate 71 makes the operator aware of the parking-braked condition of the traveling snow remover. If parking brake 70 is used, the operator can hear the sound of parking lever 39 striking rear axle 11 and see parking lever 39 swinging, thereby becoming aware of the parking-braked condition of the traveling snow remover.

As shown in Fig. 4 and 14, above each of parking brakes 70 and 90 may be provided a parking brake cover 31 projecting laterally from main frame 9 so as to protect parking brake 70 or 90 from snow or stones and to protect an operator from parking brake 70 or 90 in operation.

Each of parking brakes 70 and 90, which is provided on the left side portion of the snow remover in the above-mentioned embodiments, may be provided on the right side portion of the snow remover. Brake disc 79 may be provided on rear axle 11. Correspondingly, brake base plate 71, brake arm plate 74 and the like provided on main frame 9 may be shifted backward.

Conventionally, if a snow remover without a parking brake is going to be provided with a parking brake, a transmission housing no parking brake must be replaced with another transmission housing a parking brake, thereby requiring intricate labours and increasing costs.

According to the present embodiments, the snow remover originally having no parking brake can be easily provided with a parking brake. That is, all required to do for providing a parking brake to the snow remover is to attach parking brake 70 or 90 onto outside portions of main frame 9 and front axle 4 while the original parts including a transmission are used as they are. Parking brake 70 or 90 mounted on the outside portion of the snow remover facilitates the maintenance thereof. On the other hand, parking brakes 70 and 90 can be easily removed from main frame 9 and front axle 4.

## Claims

1. A travelling device with a parking brake (70;90), said parking brake (70;90) comprising:
a disc (79) having a plurality of recesses (79b) on the periphery thereof, said disc (79) being provided on an axle (4) supporting a travelling wheel of the travelling device and being integrally rotatable with said axle (4);
a brake arm (74) rotatably provided on a main frame (9) of the travelling device;
an operating lever (78;38) operable between a release position and a parking position and connected to said brake arm (74) to rotate said brake arm (74); and
an engaging member (77) provided on said brake arm (74), wherein said brake arm (74) is rotatable to an engaging position where said engaging member (77) is engaged into one of said recesses (79b) of said disc (79) when said operating lever (78;38) is operated to said parking position and is rotatable to a disengaging position where said engaging member (77) is disengaged from said recess (79b) when said operating lever (78;38) is operated to said release position; and
biasing means (35) provided to said brake arm (74) for biasing said brake arm (74) towards said disc (79), wherein, when said operating lever (78;38) is at said parking position, said biasing means (35) biases said engaging member (77) into engagement in said one of said recesses (79b), but allows said engaging member (77) to be disengaged from said one of said recesses (79b) of said disc (79) when a force more than a predetermined value is applied onto said brake arm (74) against the biasing force of said biasing means (35) ;
**characterized in that**
said engaging member is a roller (77); and
the curvature of said resesses (79b) of said disc (79) is coincident with that of said roller (77) so that said roller (77) can be engaged in one of said recesses (79b) for locking said axle (4),
a maximum depth of said recesses (79b) of said disc (79) being smaller than the radius of curvature of said roller (77), thereby allowing said roller (77) to be removed from one of said recesses (79b) and enter the next of said recesses (79b) if, in the parking position, said locked axle (4) is forcibly rotated, and
the edges of said disc (79) between adjacent recesses (79b) being rounded off.

2. The travelling device with the parking brake (70;90) as set forth in claim 1, wherein the arrangement is such that, when said operating lever (78;38) is at said parking position and said locked axle (4) is forcibly rotated, said roller (77) is removed from one of said recesses (79b) and is pressed into the next of said recesses (79b), thereby causing a sound.

3. The travelling device with the parking brake (70;90) as set forth in claim 1 or 2, wherein said brake arm (74) includes first and second end portions opposite to each other with respect to a pivot axis of said brake arm (74), wherein said operating lever (78;38) and said biasing means (35) are connected to said first end portion and said roller (77) is provided on said second end portion.

4. The travelling device with the parking brake (70;90) as set forth in any one of claims 1 to 3, wherein said parking brake comprises a guide member (71e) for guiding said operating lever (78) and allowing fixing of a position of said operating lever (78).

5. The travelling device with the parking brake (70;90) as set forth in any one of claims 1 to 4, wherein said travelling device is a snow remover.

## Patentansprüche

1. Eine fahrbare Vorrichtung mit einer Feststellbremse (70;90), wobei die Feststellbremse (70;90) aufweist:
eine Scheibe (79), die über eine Vielzahl von Ausnehmungen (79b) an ihrem Umfang verfügt, wobei die Scheibe (79) auf einer Achse (4) vorgesehen ist, die ein Laufrad der fahrbaren Vorrichtung lagert und mit der Achse (84) integral drehbar ist;
einen Bremsarm (74), der drehbar an einem Hauptrahmen (9) der fahrbaren Vorrichtung vorgesehen ist;
einen Betätigungshebel (78;38), betätigbar zwischen einer Freigabeposition und einer Parkposition und mit dem Bremsarm (74) verbunden um den Bremsarm (74) zu drehen; und
ein Eingriffselement (77), das an dem Bremsarm (74) vorgesehen ist, wobei der Bremsarm (74) zu einer Eingriffsposition drehbar ist, wo das Eingriffselement (77) mit einer der Ausnehmungen (79b) der Scheibe (79) in Eingriff ist, wenn der Betätigungshebel (78;38) in die Parkposition betätigt ist, und zu einer Position außer Eingriff drehbar ist, wo das Eingriffselement (77) aus der Ausnehmung (79b) ausgerückt ist, wenn der Betätigungshebel (78;38) in die Freigabeposition betätigt wird; und
ein Vorbelastungsmittel (35) das an dem Bremsarm (74) vorgesehen ist, um den Bremsarm (74) in Richtung der Scheibe (79) vorzubelasten, wobei, wenn sich der Betätigungshebel (78;38) an der Parkposition befindet, das Vorbelastungsmittel (35) das Eingriffselement (77) in Eingriff in die eine der Ausnehmungen (79b) vorbelastet, aber ein Ausrücken des Eingriffselements (77) aus der einen der Ausnehmungen (79b) der Scheibe (79) zulässt, wenn eine Kraft, die größer ist als ein vorbestimmter Wert, auf den Bremsarm (74) gegen die Vorbelastungskraft des Vorbelastungsmittels (35) wirkt;
**dadurch gekennzeichnet, dass**
das Eingriffselement eine Rolle (77) ist; und
die Krümmung der Ausnehmungen (79b) der Scheibe (79) mit der der Rolle (77) koinzidiert, so dass die Rolle (77) in eine der Ausnehmungen (79b) eingreifen kann, um die Achse (4) zu arretieren,
eine maximale Tiefe der Ausnehmungen (79b) der Scheibe (79) kleiner ist als der Radius der Krümmung der Rolle (77), wodurch es möglich ist, dass die Rolle (77) aus einer der Ausnehmungen (79b) entfernt wird und in die Nächste der Ausnehmungen (79b) eintritt, falls in der Parkposition die arretierte Achse (4) gewaltsam gedreht wird, und
die Kanten der Scheibe (79) zwischen nebeneinander befindlichen Ausnehmungen (79b) abgerundet sind.

2. Die fahrbare Vorrichtung mit der Feststellbremse (70;90) gemäß Anspruch 1, wobei die Anordnung derart ausgestaltet ist, dass wenn der Betätigungshebel (78;38) sich an der Parkposition befindet und die arretierte Achse (4) gewaltsam gedreht wird, die Rolle (77) aus einer der Ausnehmungen (79b) entfernt und in die Nächste der Ausnehmungen (79b) gedrückt wird, wodurch ein Geräusch verursacht wird.

3. Die fahrbare Vorrichtung mit der Feststellbremse (70;90) gemäß Anspruch 1 oder 2, wobei der Bremsarm (74) erste und zweite Endabschnitte aufweist, die einander bezüglich einer Schwenkachse des Bremsarms (74) gegenüberliegen, wobei der Betätigungshebel (78;38) und das Vorlbelastungsmittel (35) mit dem ersten Endabschnitt verbunden sind und die Rolle (77) an dem zweiten Endabschnitt angeordnet ist.

4. Die fahrbare Vorrichtung mit der Feststellbremse (70;90) gemäß einem der Ansprüche 1 bis 3, wobei die Feststellbremse ein Führungselement (71e) aufweist, um den Betätigungshebel (78) zu führen und ein Fixieren einer Position des Beätigungshebels (78) zu ermöglichen

5. Die fahrbare Vorrichtung mit der Feststellbremse (70;90) gemäß einem der Ansprüche 1 bis 4, wobei die fahrbare Vorrichtung ein Schneeräumer ist.

## Revendications

1. Dispositif itinérant ayant un frein (70;90) de stationnement, ce frein (70;90) de stationnement comprenant :
un disque (79) ayant une pluralité d'encoches (79b) sur sa périphérie, ce disque (79) étant prévu sur un essieu (4) supportant une roue de roulement du dispositif itinérant et étant solidaire en rotation de l'essieu (4);
un bras (74) de frein prévu tournant sur un châssis (9) principal du dispositif itinérant;
un levier (78;38) de fonctionnement pouvant fonctionner entre une position de desserrage et une position de stationnement et relié au bras (74) de frein pour faire tourner le bras (74) de frein; et
un élément (77) d'enclenchement prévu sur le bras (74) de frein, le bras (74) de frein pouvant tourner jusqu'à une position d'enclenchement, dans lequel l'élément (77) d'enclenchement pénètre dans l'une des encoches (79b) du disque (79), lorsque le levier (78;38) de fonctionnement vient dans la position de stationnement, et peut tourner jusqu'à une position de désenclenchement, dans laquelle l'élément (77) d'enclenchement est désenclenché de l'encoche (79b), lorsque le levier (78;38) de fonctionnement vient dans la position de desserrage; et
des moyens (35) de sollicitation prévus sur le bras (74) de frein pour faire aller le bras (74) de frein vers le disque (79), dans lequel, lorsque le levier (78;38) de fonctionnement est à la position de stationnement, les moyens (35) de sollicitation enclenchent l'élément (77) d'enclenchement dans l'une des encoches (79b), mais permettent à l'élément (77) d'enclenchement d'être désenclenché de l'une des encoches (79b) du disque (79), lorsqu'une force supérieure à une valeur déterminée à l'avance est appliquée sur le bras (74) de frein à l'encontre de la force de sollicitation des moyens (35) de sollicitation;
**caractérisé en ce que**
l'élément d'enclenchement est un galet (77); et
la courbure des encoches (79b) du disque (79) coïncide avec celle du galet (77), de manière à ce que le galet (77) puisse être enclenché dans l'une des encoches (79b) pour verrouiller l'essieu (4);
une profondeur maximum des encoches (79b) du disque (79) étant plus petite que le rayon de courbure du galet (77), en permettant ainsi au galet (77) d'être retiré de l'une des encoches (79b) et d'entrer dans l'encoche (79b) suivante, si, dans La position de stationnement, l'essieu (4) verrouillé est mis en rotation à force; et
les bords du disque (79) entre des encoches (79b) voisines sont arrondis.

2. Dispositif itinérant ayant le frein (70;90) de stationnement suivant la revendication 1, dans lequel l'agencement est tel que, lorsque le levier (78;38) de fonctionnement est dans la position de stationnement et lorsque l'essieu (4) verrouillé est mis en rotation à force, le galet (77) est retiré de l'une des encoches (79b) et est repoussé dans l'encoche (79b) suivante en provoquant ainsi un son.

3. Dispositif itinérant ayant le frein (70;90) de stationnement suivant la revendication 1 ou 2, dans lequel le bras (74) de frein comprend une première et une deuxième parties d'extrémité opposées l'une à l'autre par rapport à un axe de pivot du bras (74) de frein, le levier (78;38) de fonctionnement et les moyens (35) de sollicitation étant reliés à la première partie d'extrémité et le galet (77) étant prévu sur la deuxième partie d'extrémité.

4. Dispositif itinérant ayant le frein (70;90) de stationnement suivant l'une quelconque des revendications 1 à 3, dans lequel le frein de stationnement comprend un élément (71e) de guidage pour guider le levier (78) de fonctionnement et pour permettre de fixer une position du levier (78) de fonctionnement.

5. Dispositif itinérant ayant le frein (70;90) de stationnement suivant l'une quelconque des revendications 1 à 4, dans lequel le dispositif itinérant est un déneigeur.
